Europäisches Patentamt

European Patent Office

Office européen des brevets

(19)

(11) **EP 1 213 525 B1**

(12) **FASCICULE DE BREVET EUROPEEN**

(45) Date de publication et mention
de la délivrance du brevet:
**16.08.2006  Bulletin 2006/33**

(51) Int Cl.:
***F16L 55/04*** *(2006.01)*     ***B62D 5/06*** *(2006.01)*

(21) Numéro de dépôt: **01420215.4**

(22) Date de dépôt: **29.10.2001**

(54) **Dispositif d'amortissement de vibrations dans un circuit hydraulique**

Vorrichtung zur Schwingungsdämpfung in einem Hydraulikkreis

Device for damping vibrations in a hydraulic circuit

(84) Etats contractants désignés:
**DE ES GB IT SE**

(30) Priorité:  **07.12.2000  FR 0015939**

(43) Date de publication de la demande:
**12.06.2002  Bulletin 2002/24**

(73) Titulaire: **Société de Mécanique d'Irigny**
**69540 Irigny (FR)**

(72) Inventeur: **Couchoux, Dominique**
**69510 Thurins (FR)**

(74) Mandataire: **Bratel, Gérard et al**
**Cabinet GERMAIN & MAUREAU,**
**12, rue Boileau,**
**BP 6153**
**69466 Lyon Cedex 06 (FR)**

(56) Documents cités:
**EP-A- 0 689 985      EP-A- 0 810 396**
**EP-A- 0 872 404      FR-A- 1 382 914**

## Description

La présente invention concerne un dispositif d'amortissement de remontées de vibrations dans un circuit hydraulique, le dispositif en question étant prévu pour être intercalé entre un distributeur hydraulique d'une part, et un vérin hydraulique ou autre récepteur hydraulique analogue d'autre part.

Ce dispositif est applicable, plus particulièrement mais non exclusivement, à une direction assistée hydraulique de véhicule automobile, le dispositif étant, dans ce cas particulier, intercalé entre une valve d'assistance et un vérin hydraulique d'assistance, pour amortir les remontées de vibrations du train de roulement vers le volant.

Le document FR 1382914 A concerne un distributeur placé en sortie de la pompe d'une direction assistée hydraulique de véhicule automobile. Ce distributeur comprend un tiroir mobile en coulissement axial dans un corps pourvu de divers perçages d'entrée ou de sortie de fluide. Il possède une fonction de limitation de pression, et ne constitue pas un dispositif d'amortissement des remontées de vibrations.

Le dispositif, objet de l'invention comprend, agencés de façon coaxiale et de l'extérieur vers l'intérieur :

- un corps délimitant un évidement cylindrique, avec deux perçages d'entrée/sortie situés vers les deux extrémités de cet évidement, et prévus pour être raccordés au distributeur hydraulique, et avec deux piquages de sortie situés en des points intermédiaires de sa longueur et prévus pour être raccordés au vérin hydraulique ;
- montée fixe dans le corps, une chemise extérieure définissant une séparation centrale et des rainures longitudinales s'étendant symétriquement de part et d'autre de la séparation centrale, formant des passages radiaux en communication avec les piquages de sortie respectifs ;
- monté coulissant axialement dans la chemise extérieure, un fourreau avec une cloison de séparation centrale située entre deux évidements opposés, le fourreau comportant des premiers trous radiaux ménagés respectivement vers les fonds de ses deux évidements, et des seconds trous radiaux ménagés respectivement en des points intermédiaires de la longueur des deux évidements, les premiers et seconds trous radiaux pouvant par coulissement du fourreau être sélectivement ou simultanément mis en communication avec les rainures longitudinales, tandis que deux butées sont prévues respectivement aux deux extrémités du fourreau, chaque butée présentant des rainures radiales ;
- montées coulissantes axialement entre les premiers et seconds trous radiaux dans les deux évidements du fourreau, deux chemises intérieures respectives ;
- montés coulissants axialement dans chaque chemise intérieure, deux pistons qui divisent chacun l'évidement correspondant du fourreau en deux chambres, dont une chambre respective est en communication avec un passage d'entrée/sortie ;
- deux ressorts hélicoïdaux comprimés chacun entre une chemise intérieure et l'extrémité correspondante de l'évidement du corps ;
- deux autres ressorts hélicoïdaux comprimés chacun entre un piston et le fond de l'évidement correspondant du fourreau

la relation entre la pression (Pd) nécessaire à la circulation de fluide, dans le cas où celle-ci est commandée par le distributeur, et la pression (Pv) nécessaire à la circulation de fluide, dans le cas où celle-ci est engendrée par le vérin, étant donnée par la formule :

$$Pv = (D/d)^2.Pd$$

dans laquelle D désigne le diamètre extérieur du fourreau, et d désigne le diamètre extérieur des chemises.

Ce dispositif hydraulique, composé d'un certain nombre d'éléments montés coulissants coaxialement les uns dans les autres, agit en autorisant la circulation du fluide hydraulique au-delà d'une pression relativement faible, déterminée par construction notamment par les ressorts, lorsque cette circulation du fluide est commandée par le distributeur, mais à l'inverse, lorsque la circulation du fluide est provoquée par un mouvement du vérin, il réalise un blocage hydraulique de sorte que cette circulation inverse n'est autorisée qu'à partir d'une pression plus élevée.

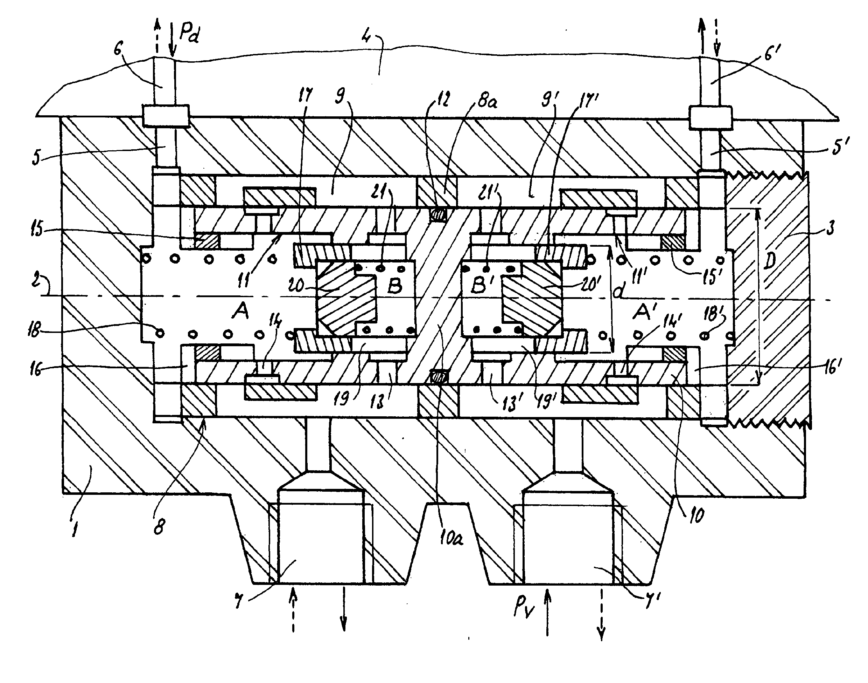

De toute façon, l'invention sera mieux comprise à l'aide de la description qui suit, en référence au dessin schématique annexé représentant, à titre d'exemple, une forme d'exécution de ce dispositif d'amortissement de remontées de vibrations dans un circuit hydraulique.

L'unique figure de ce dessin représente le dispositif, objet de l'invention, en coupe longitudinale passant par son axe.

Ce dispositif possède un corps cylindrique évidé 1, dont l'axe central est indiqué en 2. L'évidement cylindrique du corps 1 est obturé, sur son côté ouvert, par un bouchon vissé 3. Ce corps 1 peut être monté contre un support 4.

Le corps 1 possède deux perçages d'entrée/sortie 5, 5', situés respectivement vers ses deux extrémités. Les deux perçages 5, 5' sont raccordés, par des conduits respectifs 6, 6' pouvant s'étendre dans le support 4, à un distributeur hydraulique extérieur et, plus particulièrement, aux sorties d'une valve d'assistance, dans une direction assistée hydraulique de véhicule automobile.

En des points intermédiaires de sa longueur, le corps 1 du dispositif présente deux piquages de sortie symétriques 7, 7' dirigés vers un même récepteur hydraulique et, plus particulièrement, vers deux chambres d'un vérin à double effet (non représenté), tel que le vérin hydraulique d'assistance dans une direction assistée de véhicule automobile.

Dans l'évidement cylindrique du corps 1 est montée une chemise extérieure fixe 8, définissant une séparation centrale 8a et des rainures longitudinales 9 et 9', qui s'étendent symétriquement de part et d'autre de la séparation centrale 8a.

Dans la chemise extérieure 8 est monté coulissant, suivant l'axe 2, un fourreau 10 qui possède deux évidements opposés 11, 11' isolés l'un de l'autre par une séparation centrale 10a. A hauteur de cette séparation centrale 10a, le fourreau 10 présente une gorge annulaire recevant un joint d'étanchéité annulaire 12, qui coopère avec la chemise extérieure 8 dans la région de sa séparation centrale 8a.

Le fourreau 10 comporte des trous radiaux 13, 13' ménagés respectivement vers les fonds de ses deux évidements 11, 11'. Ce fourreau 10 comporte aussi d'autres trous radiaux 14, 14', ménagés respectivement en des points intermédiaires de la longueur des deux évidements 11, 11'.

Deux butées 15, 15' sont rapportées, respectivement aux deux extrémités du fourreau 10, donc vers les entrées respectives des deux évidements 11, 11'. Chaque butée 15, 15' présente extérieurement des rainures radiales respectivement 16, 16'.

A l'intérieur des deux évidements 11, 11' sont montées coulissantes suivant l'axe 2, respectivement, deux chemises 17, 17'. Deux ressorts hélicoïdaux symétriques 18, 18' sont comprimés respectivement entre la face frontale de chaque chemise intérieure 17, 17' et l'extrémité correspondante de l'évidement du corps 1.

Chaque chemise intérieure 17, 17' présente, dans sa partie arrière (du côté de la séparation centrale 10a du fourreau 10), des rainures obliques respectives 19, 19'.

A l'intérieur de chaque chemise intérieure 17, 17' est monté coulissant suivant l'axe 2, respectivement, un petit piston 20, 20'. Chaque piston 20, 20' est soumis à la poussée d'un ressort hélicoïdal 21, 21', comprimé entre ce piston 20, 20' et la paroi correspondante de la séparation centrale 10a du fourreau 10.

Le piston 20 divise l'évidement 11' du fourreau 10 en deux chambres A et B. De manière symétrique, le piston 20' divise l'autre évidemment 11' du fourreau 10 en deux chambres A' et B'.

D désigne le diamètre extérieur du fourreau 10, et d désigne le diamètre extérieur des chemises 17 et 17'.

Le dispositif précédemment décrit étant intercalé entre le distributeur hydraulique, tel que valve d'assistance, d'une part et le vérin, tel que vérin d'assistance d'autre part, ce dispositif autorise la circulation du fluide hydraulique à partir d'une faible pression déterminée par construction (ressorts 18, 18' ; 21, 21') lorsque la circulation du fluide est commandée par le distributeur (valve d'assistance), alors que, lorsque la circulation du fluide est engendrée par le vérin, celle-ci n'est autorisée qu'à partir d'une pression plus élevée. La relation entre la pression Pd nécessaire à la circulation du fluide, dans le cas où celle-ci est commandée par le distributeur, et la pression Pv nécessaire à la circulation du fluide, dans le cas où celle-ci est engendrée par le vérin, est donnée par la formule :

$$Pv = (D/d)^2 . Pd$$

dans laquelle D et d possèdent les significations précédemment indiquées.

Dans le détail, le fonctionnement du dispositif est le suivant :

Lorsque la circulation du fluide hydraulique est commandée par le distributeur (valve d'assistance), le fluide pénètre dans le dispositif par exemple par le perçage 5, et il arrive dans la chambre A. L'augmentation de la pression dans cette chambre A déplace le piston 20 vers la droite, en comprimant le ressort 21. Le fluide circule alors au travers des rainures obliques 19 de la chemise intérieure 17, puis au travers du fourreau 10 par les trous radiaux 13, et enfin au travers de la chemise extérieure 8 par les rainures longitudinales 9, pour sortir du dispositif par le piquage 7, afin d'être dirigé vers le vérin, plus particulièrement vers l'une des chambres de ce vérin.

Le fluide simultanément refoulé par le même vérin, depuis son autre chambre, pénètre dans le dispositif par le piquage 7' et peut traverser les rainures longitudinales 9' de la chemise extérieure 8, les trous radiaux 13' du fourreau 10 et les rainures obliques 19' de la chemise intérieure 17'. Ce fluide parvient ainsi dans la chambre B' où il est bloqué d'abord par le piston 20'. L'augmentation de pression dans la chambre A déplace vers la droite le fourreau 10, avec tous les composants qu'il contient, en comprimant le ressort 18'. Ce déplacement du fourreau 10 dégage les trous radiaux 14' et permet la circulation du fluide entré par le piquage 7', vers la chambre A' puis, au travers des rainures radiales 16' de la butée 15', vers le perçage 5', servant alors de sortie pour le fluide qui revient de là vers le distributeur (valve d'assistance).

Bien entendu, compte tenu de la symétrie du dispositif, le fluide suit un cheminement inverse, lorsqu'il est admis par le perçage 5', ce fluide sortant alors par le piquage 7' en direction du vérin, tandis que le fluide refoulé par ce vérin pénètre dans le dispositif par le piquage 7 et en ressort par le piquage 5.

Lorsque la circulation du fluide hydraulique est engendrée par le vérin, le fluide pénètre dans le dispositif par exemple par le perçage 7 (selon le sens de déplacement du vérin), et est dirigé vers la chambre B au travers des rainures longitudinales 9 de la chemise 8, des trous radiaux 13 du fourreau 10 et des lumières obliques 19 de la chemise intérieure 17. L'augmentation de la pression dans la chambre B déplace la chemise intérieure 17 vers la gauche, par l'intermédiaire du piston 20, en comprimant le ressort 18, jusqu'à ce que la chemise intérieure 17 soit arrêtée contre la butée 15. Le fluide peut alors circuler au travers des rainures obliques 19 de la chemise intérieure 17, et des rainures radiales 16 de la butée 15, vers le perçage 5, pour revenir au distributeur (valve d'assistance).

Bien entendu, compte tenu de la symétrie du dispositif, le fluide suit un cheminement inverse, vers le perçage 5', lorsqu'il pénètre par le piquage 7', sa circulation étant engendrée par le vérin déplacé en sens opposé de la description précédente.

Comme déjà indiqué plus haut, une telle circulation du fluide, engendrée par le vérin, n'est autorisée qu'à partir d'une pression plus élevée, ce qui permet, dans l'application préférentielle de l'invention à une direction assistée hydraulique de véhicule automobile, un amortissement des remontées de vibrations en provenance du train de roulement, le mouvement du fluide étant alors bloqué par le dispositif, de sorte que ces remontées de vibrations ne peuvent être transmises à la colonne de direction et au volant de conduite.

**Revendications**

1. Dispositif d'amortissement de remontées de vibrations dans un circuit hydraulique, le dispositif étant prévu pour être intercalé entre un distributeur hydraulique et un vérin hydraulique, qui comprend, agencés de façon coaxiale et de l'extérieur vers l'intérieur :

   - un corps (1) délimitant un évidement cylindrique, avec deux perçages d'entrée/sortie (5, 5') situés vers les deux extrémités de cet évidement, et prévus pour être raccordés au distributeur hydraulique, et avec deux piquages de sortie (7, 7') situés en des points intermédiaires de sa longueur et prévus pour être raccordés au vérin hydraulique ;
   - montée fixe dans le corps (1), une chemise extérieure (8) définissant une séparation centrale (8a), et des rainures longitudinales (9, 9') s'étendant symétriquement de part et d'autre de la séparation centrale (8a) formant des passages radiaux en communication avec les piquages de sortie (7,7') respectifs ;
   - monté coulissant axialement dans la chemise extérieure (8), un fourreau (10) avec une cloison de séparation centrale (10a) située entre deux évidements opposés (11, 11')' le fourreau (10) comportant des premiers trous radiaux (13, 13') ménagés respectivement vers les fonds de ses deux évidements (11, 11'), et des seconds trous radiaux (14, 14') ménagés respectivement en des points intermédiaires de la longueur des deux évidements (11, 11'), les premiers et seconds trous radiaux (13, 13', 14, 14') pouvant par coulissement du fourreau être sélectivement ou simultanément mis en communication avec les rainures longitudinales, tandis que deux butées (15. 15') sont prévues respectivement aux deux extrémités du fourreau (10), chaque butée (15, 15') présentant des rainures radiales (16, 16') ;
   - montées coulissantes axialement entre les premiers (13, 13') et seconds (14, 14') trous radiaux dans les deux évidements (11, 11') du fourreau (10), deux chemises intérieures respectives (17, 17') ;
   - montés coulissants axialement dans chaque chemise intérieure (17, 17'), deux pistons (20, 20') qui divisent chacun l'évidement correspondant (11, 11') du fourreau (10) en deux chambres (A.B : A',B'), dont une chambre respective (A. A') est en communication avec un perçage d'entrée/sortie (5, 5') :
   - deux ressorts hélicoïdaux (18, 18') comprimés chacun entre une chemise intérieure (17, 17') et l'extrémité correspondante de l'évidement du corps (1) ;
   - deux autres ressorts hélicoïdaux (21, 21') comprimés chacun entre un piston (20, 20') et le fond de l'évidement correspondant (11, 11') du fourreau (10),

la relation entre la pression (Pd) nécessaire à la circulation de fluide, dans le cas où celle-ci est commandée par le distributeur, et la pression (Pv) nécessaire à la circulation de fluide, dans le cas où celle-ci est engendrée par le vérin, étant donnée par la formule :

$$Pv = (D/d)^2.Pd$$

dans laquelle D désigne le diamètre extérieur du fourreau (10), et d désigne le diamètre extérieur des chemises intérieures (17, 17').

2. Dispositif selon la revendication 1, **caractérisé en ce que** le fourreau (10) présente, à hauteur de sa cloison de séparation centrale (10a), une gorge annulaire recevant un joint d'étanchéité annulaire (12) qui coopère avec la chemise extérieure (8) dans la région de sa séparation centrale (8a).

3. Utilisation du dispositif selon la revendication 1 ou 2 dans une direction assistée hydraulique de véhicule automobile, le dispositif étant intercalé entre une valve d'assistance et un vérin hydraulique d'assistance, pour amortir les remontées de vibrations du train de roulement vers le volant.

## Claims

1. Device for damping vibration transferred in a hydraulic circuit, the device being designed to be interposed between a hydraulic control valve and a hydraulic ram, which comprises, arranged coaxially and from outside to inside:

   - a body (1) delimiting a cylindrical recess, with two inlet/outlet drillings (5, 5') situated towards the two ends of this recess, and designed to be connected to the hydraulic control valve, and with two outlet tappings (7, 7') situated at intermediate points on its length and designed to be connected to the hydraulic ram;
   - mounted fixed in the body (1), an external jacket (8) defining a central separation (8a), and longitudinal grooves (9, 9') extending symmetrically on each side of the central separation (8a), forming radial passages in communication with the respective outlet drillings (7, 7');
   - mounted so as to slide axially in the external jacket (8), a sheath (10) with a central separation partition (10a) situated between two opposite recesses (11, 11'), the sheath (10) comprising first radial holes (13, 13') provided respectively towards the bottoms of its two recesses (11, 11'), and second radial holes (14, 14') provided respectively at intermediate points on the length of the two recesses (11, 11'), the first and second radial holes (13, 13', 14. 14') being able, by sliding of the sheath, to be selectively or simultaneously put in communication with the longitudinal grooves, whilst two stops (15, 15') are provided respectively at the two ends of the sheath (10), each stop (15, 15') having radial grooves (16, 16');
   - mounted so as to slide axially between the first (13, 13') and second (14, 14') radial holes in the two recesses (11, 11') of the sheath (10), two respective internal jackets (17, 17');
   - mounted so as to slide axially in each internal jacket (17, 17'), two pistons (20, 20') which each divide the corresponding recess (11, 11') of the sheath (10) into two chambers (A,B: A',B'), a respective chamber (A, A') of which is in communication with an inlet/outlet drilling (5, 5');
   - two helical springs (18, 18') each compressed between an internal jacket (17, 17') and the corresponding end of the recess in the body (1);
   - two other helical springs (21, 21') each compressed between a piston (20, 20') and the bottom of the corresponding recess (11, 11') in the sheath (10),

   the relationship between the pressure (Pd) necessary for the circulation of fluid, in the case where this is controlled by the control valve and the pressure (Pv) necessary for the circulation of fluid, in the case where this is generated by the ram, being given by the formula:

   $$Pv = (D/d)^2 . Pd$$

   in which D designates the outside diameter of the sheath (10) and d designates the outside diameter of the internal jackets (17, 17').

2. Device according to claim 1, **characterised in that** the sheath (10), has at its central separation partition (10a), an annular groove receiving an annular seal (12) which cooperates with the external jacket (8) in the region of its central separation (8a).

3. Use of the device according to claim 1 or 2 in motor vehicle hydraulic assisted steering, the device being interposed between an assistance valve and a hydraulic assistance ram, in order to damp the vibrations transferred from the drive train towards the steering wheel.

## Patentansprüche

1. Vorrichtung zur Dampfung von Schwingungsanstiegen in einem Hydraulikkreislauf, wobei die Vorrichtung dazu vorgesehen ist, zwischen einem Hydraulikverteiler und einem Hydraulikzylinder eingesetzt zu werden, und die, koaxial und von außen nach innen angeordnet, Folgendes umfasst:

   - einen eine zylindrische Aussparung begrenzenden Körper (1) mit zwei Bohrungen (5, 5'), nämlich einer Eintritts- und einer Austrittsbohrung, die sich in Richtung der beiden Enden dieser Aussparung hin befinden und dazu vorgesehen sind, an den Hydraulikverteiler angeschlossen zu werden, und zwei Austrittsstutzen (7, 7'), die sich an dazwischenliegenden Punkten seiner Länge befinden und dazu vorgesehen sind, an den Hydraulikzylinder angeschlossen zu werden;
   - einen fest im Körper (1) angebrachten Außenmantel (8), der eine mittlere Abtrennung (8a) bildet, und sich beidseits der mittleren Abtrennung (8a) symmetrisch erstreckende Längsrillen (9, 9'), die radiale Durchgänge bilden, die mit den jeweiligen Austrittsstutzen (7, 7') in Verbindung stehen;
   - eine axial gleitbeweglich im Außenmantel (8) angebrachte Gleithülse (10) mit einer mittleren Trennwand (10a), die sich zwischen zwei entgegengesetzten Aussparungen (11, 11') befindet, wobei die Gleithülse (10) erste radiale Öffnungen (13, 13'), die jeweils zu den Böden dieser beiden Aussparungen (11, 11') hin ausgebildet sind, und zweite radiale Öffnungen (14, 14') umfasst, die jeweils an dazwischenliegenden Punkten der Länge der beiden Aussparungen (11, 11') ausgebildet sind, wobei die ersten und zweiten radialen Öffnungen (13, 13', 14, 14') durch Gleiten der Gleithülse selektiv oder gleichzeitig mit den Längsrillen in Verbindung gesetzt werden können, während an den beiden Enden der Gleithülse (10) jeweils zwei Anschläge (15, 15') vorgesehen sind, wobei jeder Anschlag (15, 15') radiale Rillen (16, 16') aufweist;
- zwei jeweilige, axial gleitbeweglich zwischen den ersten (13, 13') und zweiten (14,14') radialen Öffnungen in den beiden Ausnehmungen (11, 11') der Gleithülse (10) angebrachte Innenmäntel (17, 17');
- zwei axial gleitbeweglich in jedem Innenmantel (17, 17') angebrachte Kolben (20, 20'), die jeweils die entsprechende Aussparung (11, 11') der Gleithülse (10) in zwei Kammern (A, B; A', B') aufteilen, wovon eine jeweilige Kammer (A, A') mit einer Eintritts-/Austrittsöffnung (5, 5') in Verbindung steht;
- zwei Spiralfedern (18, 18') die jeweils zwischen einem Innenmantel (17, 17') und dem entsprechenden Ende der Aussparung des Körpers (1) komprimiert sind;
- zwei weitere Spiralfedern (21, 21'), die jeweils zwischen einem Kolben (20, 20') und dem Boden der entsprechenden Ausnehmung (11, 11') der Gleithülse (10) komprimiert sind,

wobei die Beziehung zwischen dem zur Fluidzirkulation notwendigen Druck (Pd), im Falle, dass dieser durch den Verteiler geregelt wird, und dem zur Fluidzirkulation notwendigen Druck (Pv), im Falle, dass dieser durch den Zylinder erzeugt wird, durch die Formel

$$Pv = (D/d)^2 \cdot Pd$$

gegeben ist, wobei D den Außendurchmesser der Gleithülse (10) und d den Außendurchmesser der Innenmäntel (17, 17') bezeichnet.

**2.** Vorrichtung nach Anspruch 1,
**dadurch gekennzeichnet, dass**
die Gleithülse (10) auf Höhe ihrer mittleren Trennwand (10a) eine ringförmige Rille aufweist, die eine Ringdichtung (12) aufnimmt, die mit dem Außenmantel (8) im Bereich seiner mittleren Abtrennung (8a) zusammenwirkt.

**3.** Verwendung der Vorrichtung nach Anspruch 1 oder 2 in einer hydraulischen Kraftfahrzeugservolenkung, wobei die Vorrichtung zwischen einem Hilfsventil und einem Hilfshydraulikzylinder eingesetzt ist, um Schwingungsfortpflanzungen vom Laufwerk zum Lenkrad zu dämpfen.